# EUROPEAN PATENT APPLICATION

(11) **EP 4 449 860 A1**
(43) Date of publication of application: **23.10.2024**
(21) Application number: 24166399.6
(22) Date of filing: 26.03.2024
(51) Int. Cl.: A01K 1/00

(54) **CONDITIONS CONTROL SYSTEM FOR AN ANIMAL SHELTER**

(30) Priority: 28.03.2023 FI 20235355
(71) Applicant: Omia Oy, 60200 Seinäjoki (FI)
(72) Inventor: Panula, Erkki-Jussi, 60200 Seinäjoki (FI)
(74) Representative: Kolster Oy Ab

(57) **Abstract**

The present application relates to an animal shelter conditions control system (1) comprising: an inlet air unit (10); at least one inlet air element (11) for supplying inlet air to the animal shelter; and a two-part degassing apparatus comprising a lower degassing apparatus (20) and an upper degassing apparatus (30). The lower degassing device (20) comprises a lower gas outlet valve (21) adjacent to or in the floor of the animal shelter. The upper degassing apparatus (30) comprises an upper outlet valve (31) above said at least one inlet air element (11), and the upper degassing apparatus (30) further comprises a gas tank (50) for recovering gas collected from the upper outlet valve.

## Description

### FIELD OF THE INVENTION

The present invention relates to a conditions control system for an animal shelter to promote animal welfare and reduce greenhouse emissions from animal shelters.

The present invention can be used in particular in agricultural animal shelters such as barns, piggeries, sheepfolds, henhouses, horse stables, or other similar animal shelters.

### BACKGROUND OF THE INVENTION

The main purpose of a barn, piggery, sheepfold, henhouse, horse stable, or other similar animal shelter is to provide the animals housed in the shelter with suitable living conditions for enabling their welfare. In addition to ethical considerations, animal welfare is also linked to the productivity of animal farms, thus directly affecting the animal farm economy. When designing animal shelters, one must consider the different animal welfare requirements. The most important living environment factors for animal welfare are temperature, humidity, carbon dioxide and methane concentration in the breathing air, and air velocity. For example, in the case of cattle, high air temperature combined with high humidity causes so-called heat stress in cattle, reducing cattle productivity and increasing risk of various diseases. The velocity of air movement has also been found to have a clear negative effect on animal comfort and, especially at low temperatures, animals have been found to avoid areas with high air movement.

Preferable animal housing air temperature varies from one animal species to another, but also according to the animal's life stage. In general, the target conditions for dairy cattle are: air temperature below 20 degrees Celsius in summer, air temperature of 3-10 degrees Celsius in winter, air humidity of around 50-60%, air carbon dioxide content below 2000 ppm, low air velocity, and low noise levels. The heat output power of a milking cow can be as high as 2.0 kW, which means that an animal shelter with 60 milking cows, for example, has a heat output power of about 90-120 kW for the animals alone. This means that the cooling demand of an animal shelter can be significant, especially during hot periods. In addition, the animals produce significant amounts of water vapour, methane and carbon dioxide when they breathe and sweat, which must be removed from the animal shelter in order to achieve and maintain favourable living conditions.

In addition to animal welfare, there is significant pressure on animal farms to reduce greenhouse gas emissions. According to Statistics Finland, agriculture is the third largest producer of greenhouse gases with a share of about 14%. Of the greenhouse gas emissions from agriculture, emissions from cattle fattening account for about 31% and manure management for about 11%. Current animal farms have not found a solution and statistics show that total emissions from agriculture have remained almost constant over the last 30 years, when looking at statistics for the period 1990-2020. Methane emissions make up a significant proportion of these agricultural greenhouse gas emissions and, for example, one cow produces around 0.5 m3 of methane per day. Significant amounts of methane are also produced from manure from animals in the animal shelter. The carbon dioxide emissions from the animals are relatively significantly lower in impact than these methane emissions. It is therefore obvious that the production of greenhouse gases and in particular the handling of methane produced by animals has been a difficult problem to solve in agriculture.

Previous solutions have sought to promote animal welfare and productivity in so-called cold housing, which uses natural ventilation based on air temperature differences. In these cold sheds, the walls and roofs are often constructed with poorly insulating curtain structures that block the effects of rain and wind while allowing the inside air temperature in the shed to follow the temperature of the outside air. Because these cold housing systems rely on natural ventilation, the living conditions in the animal sheds are poorly controlled, causing carbon dioxide and methane levels to rise above desirable levels, especially in winter. In addition, in these known solutions, problematic greenhouse gases are vented directly to the outside air.

There is therefore a clear need to solve the current problems related to animal welfare and greenhouse emissions from animal housing.

### SUMMARY OF THE INVENTION

The object of the present invention is to solve the problem described above and to provide a solution that enables the reduction of greenhouse emissions from an animal shelter and the promotion of animal welfare. This object is achieved by a conditions control system for an animal shelter according to independent claim 1.

Preferable embodiments of the invention are disclosed in the dependent claims.

Other advantages and details provided by the invention are set out in the following, after describing specific embodiments of the invention in more detail.

### SHORT DESCRIPTION OF FIGURES

The invention is described in more detail below by way of example with reference to the following figures, of which:
Figure 1 shows a cross-sectional view of an embodiment of a conditions control system for an animal shelter, and
Figure 2 shows a cross-sectional view of an embodiment of a conditions control system for an animal shelter.

### DESCRIPTION OF AT LEAST ONE EMBODIMENT

In the present figure, the animal shelter is not shown to scale, but is schematic, illustrating the basic structure and operation of the preferred embodiments. Thus, the structural elements indicated by reference numbers in the attached figure correspond to the structural elements indicated by reference numbers in this description.

The following embodiments are only examples. Although the following description refers to "an" embodiment in several places, this does not necessarily imply that each such reference applies to the same embodiment or that the characteristic applies to only one embodiment. Individual features of different embodiments may also be combined to achieve other embodiments. Furthermore, the words "comprising" and "including" should be understood as not limiting the embodiments described to only contain those features that are mentioned, and such embodiments may also include characteristics/structures that are not specifically mentioned. All combinations of embodiments are considered possible, provided that their combination does not lead to structural or logical inconsistencies.

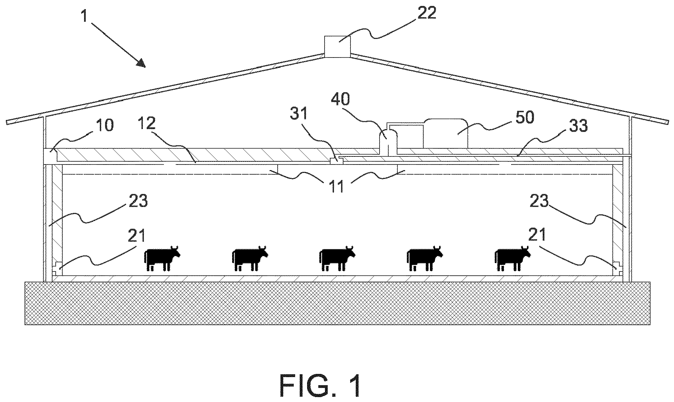

Figure 1 shows an embodiment of a conditions control system 1 for an animal shelter, comprising an inlet air unit 10, at least one inlet air element 11 for supplying inlet air to the animal shelter, and a two-part degassing apparatus. This arrangement enables ventilation to be implemented in the animal shelter to promote animal welfare, and the two-part arrangement of the degassing apparatus enables a more comprehensive degassing arrangement so that gases which build up at different heights in the interior of the animal shelter, in particular greenhouse gases, can be removed as local exhaust.

This two-part degassing apparatus comprises a lower degassing apparatus 20, and an upper degassing apparatus 30. Dividing the degassing apparatus into an upper degassing apparatus 30 and a lower degassing apparatus 20 is advantageous because the greenhouse gases generated by the animals are deposited in the animal shelter either in the lower part of the animal shelter or in the upper part of the animal shelter.

The lower degassing apparatus 20 comprises a lower outlet valve 21 adjacent to or in the floor of the animal shelter. This positioning allows for the local extraction of heavier gases than air, in particular carbon dioxide produced by animal breathing and hydrogen sulphide produced by other life processes, to the extent that it is not removed with the manure, directly near its point of origin, thus improving the quality of the animal breathing air, and allowing for low carbon dioxide levels throughout the barn.

The upper degassing apparatus 30 comprises an upper outlet valve 31 above said at least one inlet air element 11. This positioning allows for the local extraction of lighter gases than air, in particular methane, ammonia and hydrogen from animal living processes. In addition, the positioning of the inlet air element 11 below the upper outlet valve 31 allows the inlet air flow to disturb the stratification of the gases in the animal shelter as little as possible. Of the gases mentioned above, methane is the most significant in terms of environmental impact, concentration and energy content. Methane is a potent greenhouse gas when emitted to the atmosphere, but its high energy content means that it can also be captured and used. Captured methane can be used as a gas in its natural state or further refined, for example into biofuels through polymerisation.

The upper degassing apparatus 30 further comprises a gas tank 50 for recovering gas collected from the upper outlet valve. In this way, the lightest gases in the barn's indoor air, such as methane, ammonia, and hydrogen, can be recovered in the gas tank 50. The gases recovered in the gas tank continue to stratify in the gas tank 50, whereby the lightest gases can be removed from an upper part of the gas tank 50 and the heaviest gases can be removed from a lower part of the gas tank 50.

In the embodiment of Fig. 1, the upper degassing apparatus 30 further comprises a gas separation device 40 for separating the gas mixture discharged from the upper outlet valve 31 into at least two mutually different gas components, of which a first gas component is directed to the gas tank 50 connected to the gas separation device 40 to be recovered, and of which a second gas component is directed away from the animal shelter. By separating and recovering these lighter-than-air greenhouse gases in the gas tank 50, greenhouse emissions generated in the animal shelter can be significantly reduced, preferably by at least 50-60%..

According to an embodiment, stratification of the gases in the gas separation device 40 is continued by slowing the gas movement to a fraction of a normal duct velocity. This slowing of the velocity allows the gases to stratify and thus the lightest gases can be removed from an upper part of the gas separation device 40 into a gas tank 50 connected to the gas separation device 40, and the remaining heavier gases can be passed out.

Preferably, the above mentioned gas separation device 40 is designed to separate particularly methane from the gas captured by the upper outlet valve 31. Preferably, the above mentioned gas separation device 40 is further designed to separate ammonia from the gas captured by the upper outlet valve 31.

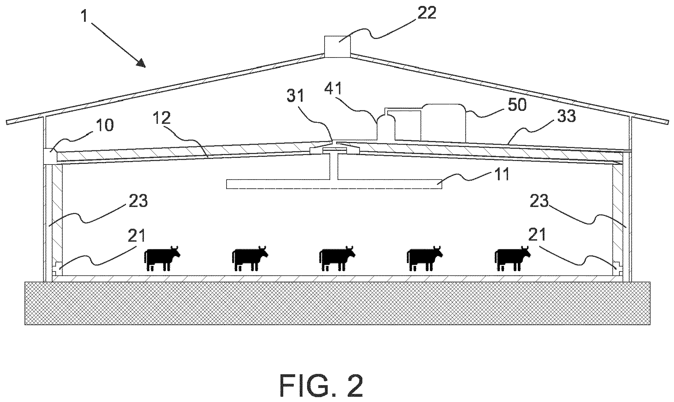

According to an embodiment of Fig. 2, preferably gas captured from the upper outlet valve 31 is passed through a gas washing device 41 to remove ammonia from the gas captured from the upper outlet valve 31. The gas washing device comprises a water layer through which the gas is passed, whereby the water-soluble ammonia is dissolved in the water layer in a so-called water wash. Correspondingly, water-insoluble methane and hydrogen pass through this so-called water wash without dissolving in the water.

In the embodiment according to Fig. 1, said at least one inlet air element 11 is a perforated inner ceiling structure. In this embodiment, the inner ceiling structure is implemented as a lowered inner ceiling, whereby a space is formed between the upper inner ceiling and the lower inner ceiling into which inlet air can be blown. In turn, the inlet air is extracted into the animal shelter through holes in the lower ceiling structure. The air flow downwardly from the holes contributes to directing carbon dioxide and hydrogen sulphide towards the lower outlet valve 21 of the lower degassing apparatus 20. Preferably, the inlet air unit 10 then comprises a fan for blowing the inlet air into the inlet air element 11. Alternatively, the inlet air element 11 may be implemented by any suitable structure that allows the inlet air to be introduced into the animal shelter in the desired manner.

In the embodiment of Fig. 2, the inlet air element 11 is a perforated inlet valve extending in the animal shelter. In this embodiment, the inlet valve is lowered below the inner ceiling, such that an air gap is left between the inlet valve and the inner ceiling where the lightest gases can stratify. The holes in the perforated inlet air valve are preferably directed downwards, so that the inlet air flows are directed downwards.

In the embodiment of Fig. 2, the inner ceiling of the animal shelter is raised from the center of the inner ceiling, and the upper outlet valve 31 is positioned in the raised area of the inner ceiling. This allows the lightest gases to be directed to the upper outlet valve 31. These gases can be collected by the upper outlet valve 31 either continuously or at predetermined time intervals.

Preferably, the inlet air element 11 or, respectively, the inlet air elements 11 cover at least 50% of the area of the inner ceiling of the animal shelter, more preferably at least 65% of the area of the inner ceiling of the animal shelter, and most preferably at least 80% of the area of the inner ceiling of the animal shelter. The inlet air element 11, which is spread over a wide area, preferably almost the entire inner ceiling area, allows sufficient inlet air volume to be introduced into the animal shelter without increasing the inlet air velocity above the desired level. This further promotes significant stratification of gases in the animal shelter, thus allowing efficient local exhaust of gases.

Preferably, the inlet air element 11 is arranged to introduce the inlet air into the animal shelter at a low velocity, preferably less than 0.1 meter per second. This low air movement velocity makes the introduction of inlet air into the animal shelter almost silent and draught-free, which contributes to both animal welfare and significant stratification of gases in the animal shelter. More preferably, the inlet air velocity is in the range of 0.05-0.1 metres per second to promote animal welfare. Most preferably, the inlet air velocity can be reduced to less than 0.05 metres per second, thus minimising the air velocity experienced by the animals and further improving gas stratification in the animal shelter.

Preferably, the inlet air element 11 further comprises a UV light source for reducing bacteria and viruses in the inlet air.

Preferably, the inlet air element 11 further comprises a porous material to dampen sound from the inlet air flow.

Depending on the size of the animal shelter, preferably the upper degassing apparatus 30 comprises a plurality of upper outlet valves 31 to efficiently discharge the gases to be removed. In this case, the upper degassing apparatus 30 comprises an individual degassing device 40 preferably for each upper outlet valve 31. This allows efficient gas separation even at higher total gas removal flow rates. Each gas separation device 40 may be connected to the same gas tank 50, but alternatively the animal shelter 1 may comprise a plurality of gas tanks for storing the separated gas.

Alternatively, where the degassing apparatus 30 comprises a plurality of upper outlet valves 30, one or more upper outlet valves 30 may be connected to the degassing apparatus 40. In this case, the animal shelter may comprise a plurality of upper outlet valves 30, and a plurality of degassing apparatuses 40, such that the number of upper outlet valves 30 is greater than or equal to the number of degassing apparatuses 40.

Depending on the size of the animal shelter, preferably the lower degassing apparatus 20 comprises a plurality of lower outlet valves 21 so that the gases to be removed can be efficiently removed without increasing the indoor air velocity of the animal shelter above a desired level.

In the embodiment of Fig. 1, the lower degassing apparatus 20 comprises a degassing unit 22 on a roof or end of the animal shelter, and a lower gas outlet channel 23 connecting the lower outlet valve 21 or, respectively, the lower outlet valves 21 to the degassing unit 22. In an embodiment, said lower gas outlet channel 23 is formed as a channel within a wall structure of the animal shelter. Preferably, the degassing unit 22 comprises a fan, whereby gases exhausted through the lower degassing apparatus 20 are mechanically blown out of the animal shelter. The advantage of arranging the degassing unit 22 on the roof or at the end of the animal shelter is that the gas exhausted from the lower outlet valve 21 can be used for cooling, heating, or insulating the structures of the animal shelter. In an embodiment, the carbon dioxide-containing gas removed from the lower outlet valve 21 is directed to a greenhouse or other suitable use arranged adjacent to the animal shelter. This will further reduce emissions from the animal shelter.

Preferably, the lower gas outlet channel 23 is formed by an air gap in the wall of the animal shelter. This air gap may connect a plurality of lower outlet valves 21, provided that the animal shelter comprises a plurality of lower outlet valves 21. Preferably, this air gap is arranged between the facade cladding and the thermally insulated structure in the wall of the animal shelter. When the lower gas outlet channel 23 is configured as an air gap in the animal shelter wall as described above, the exhausted gas can be used for example for drying, heat removal, and insulation of the animal shelter wall structure.

If the structure of the animal shelter so requires, or if there are multiple inlet air elements 11 in the animal shelter, the animal shelter condition control system 1 further preferably comprises an inlet air channel 12 for delivering inlet air from the inlet air unit 10 to said at least one inlet air element 11. This allows the inlet air to be distributed simultaneously to multiple inlet air elements 11 and/or to be directed from the inlet air unit 10 to the inlet air element 11 if this is not directly possible.

If the structure of the animal shelter so requires, the upper degassing apparatus 30 preferably comprises an upper gas outlet channel 33 for removing the second gas component from the gas separation device 40. Depending on the location of the upper degassing apparatus 30 within the animal shelter, the upper gas outlet channel may be required to remove the second gas component from the gas separation device 40.

Preferably, the upper degassing apparatus 30 is arranged to remove less gas than the lower degassing apparatus 20. Preferably, the upper degassing apparatus 30 is arranged to remove at least 50% less gas than the lower degassing apparatus 20. The lower degassing rate of the upper degassing apparatus 30 may be arranged, for example, either by sizing the outlet valves 21, 31 or by adjusting the blowing capacity of the degassing apparatuses. In general, the relative degassing rate of the upper degassing apparatus is higher during cold periods than during warm periods, due to the need to cool the animal house during warm periods. When the animal shelter is cooled by the lower degassing apparatus 20, the degassing rate of the lower degassing apparatus 20 is increased while the degassing rate of the upper degassing apparatus 30 is kept constant. Preferably, the upper degassing apparatus removes about 10-20% of the total degassing removed by the two-part degassing apparatus. The absolute total degassing rate of a two-part degassing apparatus usually decreases in winter due to a reduction in the total ventilation demand.

Preferably, the lower outlet valves 21 are closable and openable. In this case, the temperature of the animal shelter can be partially controlled by closing or opening the lower gas outlet valves 21, depending on the amount of sunlight that the animal shelter is exposed to. For example, by closing the lower cold direction gas outlet valves 21, which are protected from sunlight, the flow velocity of the exiting gas and thus the ability of the lower degassing apparatus 20 to transfer heat away from the structure of the animal shelter can be increased.

Preferably, the animal shelter condition control system 1 further comprises a temperature and/or carbon dioxide sensor for measuring the temperature and/or carbon dioxide concentration of the animal shelter. These measured temperature and/or carbon dioxide values may be used to adjust the conditions of the animal shelter to more effectively control animal welfare. Accordingly, the animal shelter condition control system 1 preferably further comprises a control device for controlling the inlet air and/or the discharge gas based on the measured temperature and/or carbon dioxide concentration in the animal shelter.

Preferably, during warm periods, the control of the conditions is primarily controlled by the air temperature, and during cold periods, the control of the conditions is primarily controlled by the desired carbon dioxide concentration.

Preferably, the air temperature in the animal shelter can also be controlled by influencing the temperature of the inlet air or outlet gases, in addition to ventilation alone. In this case, the animal shelter condition control system 1 further comprises a heat exchanger for heating or cooling the animal shelter inlet air and/or discharge gases. Preferably, the thermal energy of this heat exchanger is derived from the ground, thereby utilising the ground as an energy store. Ground heat energy can be extracted from the ground, for example by using known ground loops or ground heat wells, depending on the environment of the animal shelter and the available soil.

The advantages of cooling the inlet air to the animal shelter during warm periods are obvious, but cooling the gas exiting through the lower degassing apparatus 20 during warm periods is also advantageous. When cooling the discharge gas, moisture is removed from the discharge gas by condensation. This reduction in moisture reduces the risk of decay of the animal shelter structure and, if the animal shelter includes the lower gas outlet channel 23 described above formed as an air gap in the wall, the thermal control of the animal shelter is further improved.

In summer, the ground temperature rises by several degrees and therefore it is advantageous to release the heat charged into the ground in winter. If the heating demand of the animal shelter is not sufficient to sufficiently reduce the ground temperature during the cold season, the ground heat can be directed to other suitable nearby uses. Suitable uses in the surrounding area include, for example, thawing and maintaining the thaw of yard areas and winter paddocks, and heating of other buildings.

Preferably the animal shelter is a barn, piggery, henhouse, sheepfold, horse stable, or other similar animal shelter.

Preferably, the structure of the animal shelter is tight so that the indoor air of the animal shelter cannot freely exchange with the outdoor air.

It is to be understood that the above description and the accompanying figure are intended only to illustrate the present invention. It will be obvious to those skilled in the art that the invention can be modified and changed in other ways without departing from the scope of protection of the invention.

## Claims

1. A conditions control system (1) for an animal shelter, comprising:
an inlet air unit (10),
at least one inlet air element (11) for supplying inlet air to the animal shelter, and
a two-part degassing apparatus comprising a lower degassing apparatus (20), and an upper degassing apparatus (30),
which lower degassing apparatus (20) comprises a lower outlet valve (21) adjacent to or in the floor of the animal shelter, **characterized in that**
said at least one inlet air element (11) is a lowered inner ceiling structure or a perforated inlet air valve extending over a wide area,
the upper degassing apparatus (30) comprises an upper outlet valve (31) above said at least one inlet air element (11), and
the upper degassing apparatus (30) further comprises a gas tank (50) for recovering gas collected from the upper outlet valve.

2. The conditions control system (1) for an animal shelter according to claim 1, wherein the upper degassing apparatus (30) further comprises a gas separation device (40) for separating the gas mixture discharged from the upper outlet valve (31) into at least two mutually different gas components, of which a first gas component is directed to the gas tank (50) connected to the gas separation device (40) to be recovered, and of which a second gas component is directed away from the animal shelter.

3. The conditions control system (1) for an animal shelter according to claim 2, wherein the first gas component comprises mainly methane.

4. The conditions control system (1) for an animal shelter according to a preceding claim, wherein the inlet air element (11) or respectively the inlet air elements (11) cover at least 50 % of the area of an inner ceiling of the animal shelter, more preferably at least 65 % of the area of the inner ceiling of the animal shelter, most preferably at least 80 % of the area of the inner ceiling of the animal shelter.

5. The conditions control system (1) for an animal shelter according to a preceding claim, wherein the inlet air element (11) is arranged to bring inlet air into the animal shelter at a low velocity, preferably less than 0.1 metres per second.

6. The conditions control system (1) for an animal shelter according to a preceding claim, wherein the upper degassing apparatus (30) comprises a gas washing device (41) for removing ammonia from the gas collected by the upper outlet valve (31).

7. The conditions control system (1) for an animal shelter according to claim 5, wherein the inner ceiling of the animal shelter is raised in the middle of the inner ceiling and the upper outlet valve (31) is located in the raised area of the inner ceiling.

8. The conditions control system (1) for an animal shelter according to a preceding claim, wherein the lower degassing apparatus (20) comprises a plurality of lower outlet valves (21).

9. The conditions control system (1) for an animal shelter according to a preceding claim, wherein the lower degassing apparatus (20) comprises a degassing unit (22) on a roof or at an end of the animal shelter, and a lower gas outlet channel (23) connecting the lower outlet valve (21) or, respectively, the lower outlet valves (21) to the degassing unit (22).

10. The conditions control system (1) for an animal shelter according to claim 9, wherein the lower gas outlet channel (23) is formed by an air gap in a wall of the animal shelter.

11. The conditions control system (1) for an animal shelter according to a preceding claim, wherein the upper degassing apparatus (30) is arranged to discharge less gas than the lower degassing apparatus (20), preferably the upper degassing apparatus (30) is arranged to discharge at least 50% less gas than the lower degassing apparatus (20).

12. The conditions control system (1) for an animal shelter according to a preceding claim, further comprising a temperature and/or carbon dioxide sensor for measuring the temperature and/or carbon dioxide concentration in the animal shelter.

13. The conditions control system (1) for an animal shelter according to claim 12, further comprising a control device for controlling the inlet air and/or the discharge gas based on the measured temperature and/or carbon dioxide concentration in the animal shelter.

14. The conditions control system (1) for an animal shelter according to a preceding claim, further comprising a heat exchanger for heating or cooling the inlet air and/or the discharge gas of the animal house, which heat exchanger is connected to a ground loop or ground heat well.
